# EUROPEAN PATENT APPLICATION

(11) **EP 2 418 574 A2**
(43) Date of publication of application: **15.02.2012**
(21) Application number: 11177361.0
(22) Date of filing: 12.08.2011
(51) Int. Cl.: G06F 3/048

(54) **System and method for preventing touch malfunction in a mobile device**

(30) Priority: 14.08.2010 KR 20100078556
(71) Applicant: Samsung Electronics Co., Ltd., Gyeonggi-do (KR)
(72) Inventor: Kim, Hee Deog, 442-742 Gyeonggi-do (KR); Lee, Soo Kyung, 442-742 Gyeonggi-do (KR); Yi, Seung Won, 442-742 Gyeonggi-do (KR)
(74) Representative: Swinkels, Bart Willem

(57) **Abstract**

A system and method is provided that prevents touch malfunction in a mobile device that includes touch keys mapped to corresponding functions and a touch screen adjacent to the touch keys. The method includes displaying a Graphic User Interface (GUI) screen; and disabling part of the area of the touch screen that is adjacent to the touch keys, so that part of the area of the touch screen cannot detect a touch gesture on the GUI screen. Therefore, the system and method can prevent the execution of an undesired function caused by a user's simultaneous and unintentional touch on a touch panel.

## Description

### BACKGROUND OF THE INVENTION

### 1. Field of the Invention

This invention relates to mobile communication systems, and more particularly, to a system and method that prevents touch malfunction.

### 2. Description of the Related Art

With the rapid development of information and communication technology and semiconductor technology, the use of various types of mobile devices has also increased. Mobile devices employ mobile convergence to provide additional services provided by other types of mobile systems as well as their traditional services. For example, mobile devices include their usual communication functions such as voice calling or message transmission, and additional functions as well, such as a TV viewing function (e.g., mobile broadcasting, such as Digital Multimedia Broadcasting (DMB), Digital Video Broadcasting (DVB), etc.,), an audio playback function (e.g., MEPG Audio Layer 3 (MP3)), a photographing function, an Internet function, etc.

In recent years, mobile devices have employed touch screens that serve as an input mechanism and display device. Mobile devices with touch screens do not require an additional input mechanism. This makes it possible to reduce the thickness and volume of mobile devices. Since touch screens can sense touches via various types of input tools, (e.g., stylus pens, etc.) as well as users' fingers, users can intuitively operate the mobile devices. Reduction in the size of the devices and the intuitive input aids in increasing the number of mobile devices employing touch screens. In addition, mobile devices are increasingly employing touch keys instead of button type key input mechanisms located on the touch screen.

When mobile devices employ touch screens and touch keys, the devices include a touch screen area and a touch key area. The touch key area includes at least one function key for performing a particular function, such as a cancel key, a menu key, etc. The touch screen area displays a screen and senses and receives touch events. However, when the touch key area and the touch screen area are adjacent to each other, a user's touch on a touch key may cause the user to frequently touch the touch screen area. In that case, instead of executing a function allocated to the touch key that the user had intended to touch, the device may execute a function allocated to the touch screen. Thus, the user must stop the executed function allocated to the touch screen and then re-touch the desired touch key in the touch key area. This presents an inconvenience to the user as there desired function is not executed and the user must halt the inadvertently started function.

### SUMMARY OF THE INVENTION

The invention has been made in view of the above problems, and provides a system and method that prevents touch malfunction in a mobile device that occurs because part of touch screen area is touched together when one of the touch keys is touched. In this case, the term "malfunction" is used to indicate that touch that was not intended or desired was received by the device and the processing was executed according to the touch that was received.

In accordance with an exemplary embodiment of the invention, the invention provides a method for preventing malfunction in a device that includes touch keys mapped to functions and a touch screen adjacent to the touch keys, the method including: displaying a Graphic User Interface (GUI) screen; and disabling part of the area of the touch screen that is adjacent to the touch keys, so that part of the area of the touch screen cannot detect a touch gesture on the GUI screen.

In accordance with another exemplary embodiment of the invention, the invention provides a system for preventing touch malfunction in a mobile device, the system including: a touch screen for displaying a Graphic User Interface (GUI) screen and detecting a touch gesture; touch keys, adjacent to the touch screen, for executing corresponding functions; and a controller for disabling part of the area of the touch screen that is adjacent to the touch keys, so that part of the area of the touch screen cannot detect a touch gesture on the GUI screen.

In accordance with another exemplary embodiment of the invention, a terminal is disclose wherein, the terminal includes a touch screen area; a touch key area positioned adjacent to the touch screen area; and a processor in communication with a memory, the memory including code, which when accessed by the processor causes the processor to: receive substantially simultaneously a touch input from each of the touch screen area and the touch key area; determine a location from which the touch input from the touch screen area; and ignore the touch input from the touch screen area when the location is within a known distance from the touch key area.

### BRIEF DESCRIPTION OF THE DRAWINGS

The features and advantages of the invention will become more apparent from the following detailed description in conjunction with the accompanying drawings, in which:
FIG. 1 illustrates a schematic block diagram of a device according to an embodiment of the invention;
FIG. 2 illustrates a flow chart that describes an embodiment of a method for preventing a touch malfunction, according to the invention;
FIG. 3 illustrates screens of a device to which a method for preventing a touch malfunction according to an embodiment of the invention; and
FIG. 4 illustrates a flow chart that describes a second embodiment of a method for preventing a touch malfunction according to the invention.

### DETAILED DESCRIPTION OF THE INVENTION

Exemplary embodiments of the invention are described in detail with reference to the accompanying drawings. The same reference numbers are used throughout the drawings to refer to the same or similar parts. Detailed descriptions of well-known functions and structures incorporated herein may be omitted to avoid obscuring the subject matter of the invention.

The terms or words described in the present description and the claims should not be limited by a general or lexical meaning, instead should be analyzed as a meaning and a concept through which the inventor defines and describes the invention, to comply with the idea of the invention. Therefore, one skilled in the art will understand that the embodiments disclosed in the description and configurations illustrated in the drawings are only preferred embodiments, and that there may be various modifications, alterations, and equivalents thereof to replace the embodiments at the time of filing this application.

In the following embodiments of the invention, mobile devices refer to devices with a touch screen and touch keys. It will be appreciated that the invention can be applied to all information communication devices, multimedia devices, and their applications, for example, mobile communication terminals, navigation systems, digital multimedia broadcasting terminals, Personal Digital Assistants (PDAs), smartphones, Portable Multimedia Players (PMPs), etc.

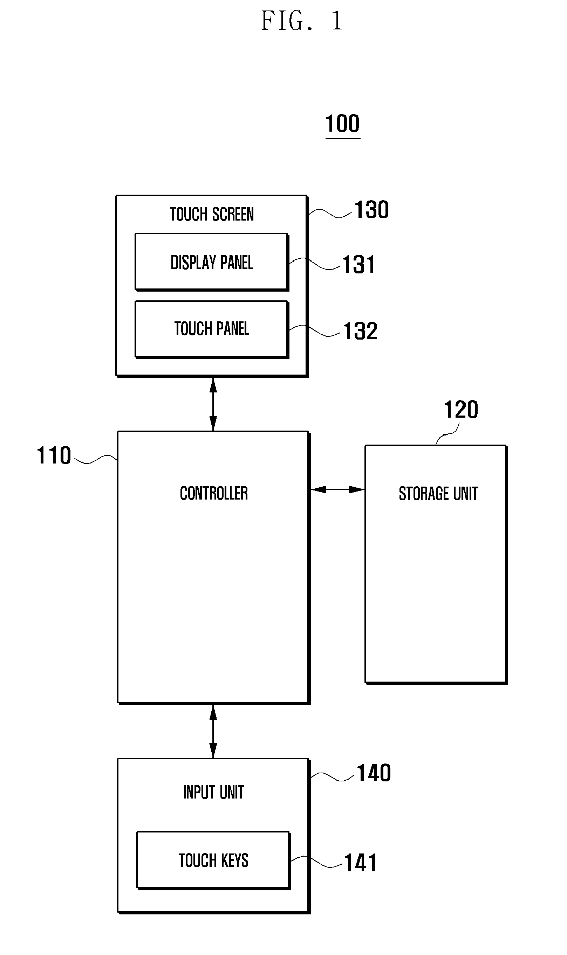

FIG. 1 illustrates a schematic block diagram of a mobile device according to an embodiment of the invention.

Referring to FIG. 1, the mobile device 100 includes a controller 110, a storage unit 120, a touch screen 130 and an input unit 140.

The input unit 140 includes input keys and function keys that allow the user to input numerical or alphabetical information and to set or control a variety of functions in the mobile device 100. For example, the input unit 140 includes a volume key for adjusting an output volume of audio signals, a cancellation key, a menu key, a hold key, etc. In an embodiment of the invention, the input unit 140 includes touch keys 141 for executing corresponding functions. For example, the touch keys 141 may be function keys such as a cancel key, a menu key, etc. The touch keys 141 are typically installed close to the touch screen 130. In an embodiment of the invention, the touch keys 141 are adjacently located at the bottom of the touch screen 130. According to the types of mobile devices, the input unit 140 may be implemented by one of a touch pad, a touch screen, and a button type keypad, or a combination thereof.

The touch screen 130 serves both as a display device and an input device. The touch screen 130 includes a display panel 131 and a touch panel 132. The display panel 131 displays screen data created when functions are executed in the mobile device 100. The display panel 131 also displays state information according to a user's key operation and function settings. The display panel 131 also displays signals and color information output from the controller 110. For example, the display panel 131 can display Graphic User Interface (GUI) screens. GUI screens typically include a number of items and allow for vertical (and/or horizontal) scrolling. Examples of GUI screens are a screen displaying a list of calls, a screen displaying a phonebook list, etc. The display unit 130 may be implemented with a Liquid Crystal Display (LCD), an Organic Light Emitting Diode (OLED), an Active Matrix Organic Light Emitting Diodes (AMOLED), or other similar technologies.

The touch panel 132 serves to perform an input function. The touch panel 132 is installed onto the display panel 131. The touch panel 132 senses a change in the physical quantity created by a user's touch gesture, coverts the changed physical quantity into a touch signal, and then transfers it to the controller 110. The touch panel 132 may be implemented with various types of touch sensors, for example, a pressure sensor, a resistive overlay type sensor, an ultrasonic reflective sensor, an optical sensor, an electronic inductive sensor, etc. Since the operation principle of the touch panel 132 is well-known to persons skilled in the art, its detailed operation will be omitted in the following description.

The storage unit 120 stores programs required to execute the operation and function of the mobile device 100 and data generated when the programs are executed. The storage unit 120 also stores data created when the programs are executed. For example, the storage unit 120 stores an operating system (OS) for booting the mobile device 100, application programs required to operate the functions of the mobile device 100, and data generated when the mobile device 100 is operated. In an embodiment of the invention, the storage unit 120 stores a program that can disable part of the area of touch panel 132 in order to prevent a touch from being sensed when a GUI screen is displayed. The storage unit 120 is composed of Random Access Memory (RAM), Read Only Memory (ROM), etc.

The controller 110 controls the operation of the mobile device 100 and the signal flow among the components in the mobile device 100. In an embodiment of the invention, the controller 110 can disable part of the area of touch screen 130, which forms a certain (or known) width of region, with respect to the boundary between the touch screen 130 and the touch keys 141, when a GUI screen is displayed. The disabled part of the area of touch screen 130, i.e., a disabled region, refers to an area of the touch screen 130 that may be touched simultaneously when one of the touch keys 141 is touched. As such, the controller can disable part of the area of touch screen 130 that may be touched when one of the touch keys 141 is touched, thereby preventing a malfunction, which might occur if the touch key is touched, from occurring in the mobile device 100. The certain or known width may be determined based on a fixed measure of width (e.g., inches or millimeters) or pixels (e.g., 20 pixels). As would be appreciated, the number of pixels selected may be dependent upon the resolution of the screen. Thus, a larger number of pixels may be necessary for a high resolution screen as opposed to a lower resolution screen.

When a touch event occurs simultaneously in one of the touch keys 141 and in an area of the touch screen 130 that is adjacent to the touched touch key, while a GUI screen is being displayed, the controller 110 ignores the touch event that occurred in the area of the touch screen 130 that is adjacent to the touched touch key, and executes a function mapped to the touched touch key. Therefore, the system according to the invention can prevent a touch malfunction that occurs because an area of the touch screen 130 that is adjacent to a touch key is also touched simultaneously when the user touches the touch key.

The controller 110 can determine whether the area of the lowest item is completely displayed at the bottom of the GUI screen on the touch screen 130. When the controller 110 ascertains that the area of the lowest item is partially displayed at the bottom of the GUI screen, it can disable a preset part of the area of the touch screen 130 or can ignore the touch event that occurred on the area of the touch screen 130, when the touch event occurred simultaneously with the touch key. However, when the controller 110 ascertains that the area of the lowest item is completely displayed at the bottom of the GUI screen, it may not perform a process of preventing a touch malfunction. This is because, when part of the area of the lowest item is partially displayed, the user would rather scroll up the screen to completely show the area of the lowest item than touch a relatively small part area of the lowest item, and then touch the lowest item. That is, when a touch gesture is performed in a state where part of the area of the lowest item is partially displayed, the controller 110 concludes that the touch gesture is made, touches the cancel key, and can then ignore the touch event that occurred on the touch screen area.

As described above, although the embodiment is implemented in such a manner that the touch screen 130 and touch keys 141 are separated from each other, it should be understood that the invention is not limited to the described embodiment. For example, the touch screen 130 and touch keys 141 may be configured in a single touch panel, and the touch panel is divided into a touch screen area and a touch key area. In that case, the touch screen area, i.e., an area overlapping the display panel 131, may be transparent. In addition, the area corresponding to the touch keys may be opaque, so that function keys are printed on the opaque area.

Although it is not shown in FIG. 1, the mobile device 100 may further include units having add-on functions as follows: an RF communication unit for wireless communication; a camera module for taking pictures or video; a module for short-range wireless communication (e.g., Bluetooth); a broadcast module for receiving and reproducing broadcasts; an audio source playback module, such as an MP3 module; an Internet communication module for performing communication via the Internet; etc. With the spread of digital convergence, although mobile devices vary too greatly to list their modifications in this description, it will be easily appreciated by those skilled in the art the other units, equivalent to the above-listed units, may be included in the mobile device 100 according to the principles of the invention.

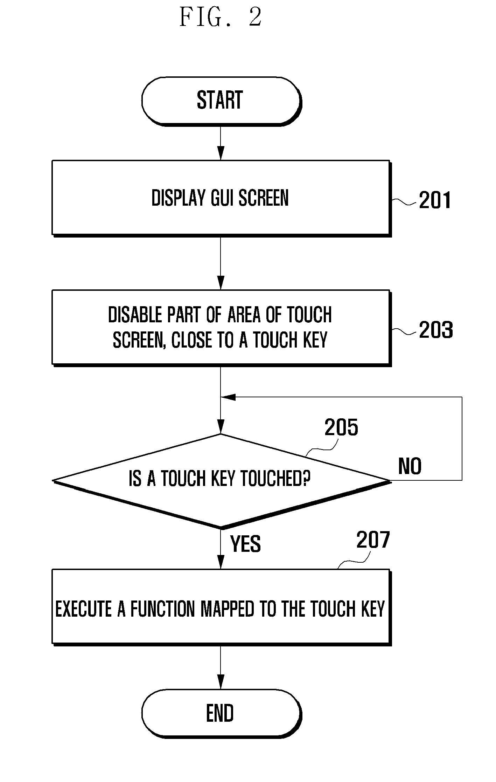

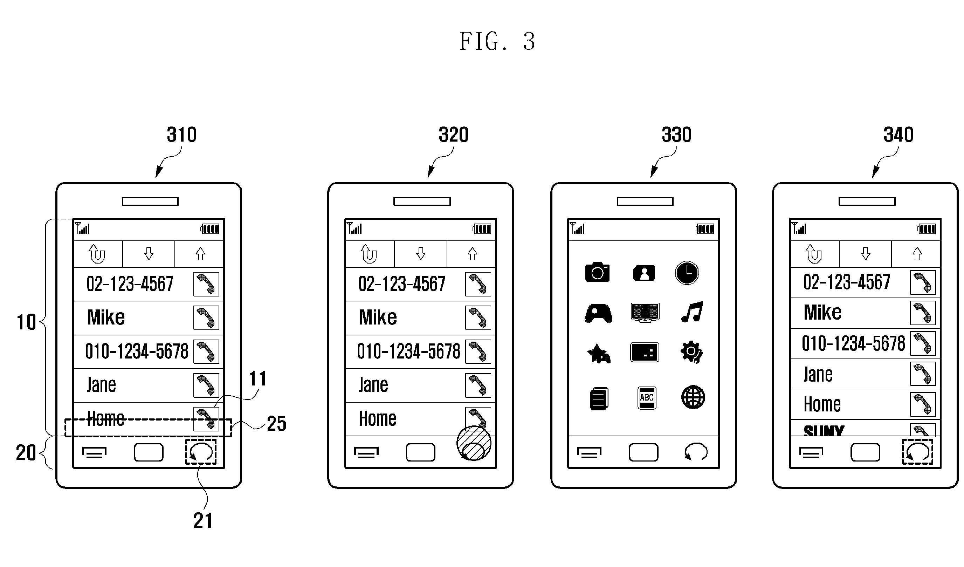

FIG. 2 illustrates a flow chart that describes an embodiment of a method for preventing a touch malfunction in a device 100, according to the invention. FIG. 3 illustrates screens that the device 100 displays in response to the method shown in FIG. 2. As is illustrated in the exemplary screen 310 of FIG. 3, a list of calls is displayed. However, it should be understood that the invention is not limited to the list of calls displayed. Rather the invention may be applicable to a variety of different screens (and associated functions or applications).

Referring to FIGS. 1 to 3, the controller 110 controls the touch screen 130 to display a GUI screen, e.g., a screen for showing a list of calls (201). For example, as shown in screen 310 of FIG. 3, the controller 110 controls the display panel 131 to display a list of contact phone numbers or nicknames with whom the user made earlier voice or video calls. In screen 310 of FIG. 3, reference number 10 represents an area of touch screen 130; reference number 20 represents an area of touch keys 141; reference number 21 represents a cancel key for executing a cancellation function; and reference number 11 represents a call key for making a call to a selected user.

Returning to FIG. 2, when a screen for a list of calls is displayed at step 201, the controller 110 may disable part of the area of the touch screen 130 that is adjacent to the area of the touch keys 141 (203). As shown in screen 310 of FIG. 3, the controller 110 can disable a portion of the area 10 of the touch screen 130, shown as a dashed-line rectangle, close to the boundary between the touch screen area 10 and the touch key area 20. Within the disabled area 25, a touch gesture is not responded to. That is, the controller 110 determines whether a touch signal from the touch keys 141 has been received (205). When the controller 110 does not receive a touch signal from the touch keys 141 at step 205, it retains the process of detecting whether to receive a touch signal at step 205.

However, when the controller 110 receives a touch signal from the touch keys 141 at step 205, it performs a function mapped to the touched touch key (207). For example, when the user touches the cancel key 21 as shown in screen 320 of FIG. 3, (as represented by the hashed circle) the controller 110 controls the touch screen 130 to display the screen that was shown before displaying the list of calls, e.g., an idle screen, as shown in screen 330 of FIG. 3.

In this illustrative example, when the user touches the cancel key 21, their touch is simultaneously applied to part of the area of the touch screen 130 (i.e., the hashed circle overlaps the "home" call key 11). . However, since part of the area of the touch screen 130 is disabled, it does not respond to a touch event that is associated with a signal received from the touch screen 130. Therefore, the system can prevent a touch malfunction that might occur because the user touches part of the area of the touch screen 130 when they also touch a touch key.

As described above, as shown in screen 310 of FIG. 3, although the embodiment is implemented in such a manner that the disabled area 25 is set along the boundary between the touch key area 20 and the touch screen area 10, it should be understood that the invention is not limited to the illustrated example. For example, one skilled in the art would recognize that invention claimed may be modified in such a manner that the disabled area 25 may be set to an area of the touch screen area 10, which executes a particular function when it is touched, e.g., an area corresponding to the area of the call key 11.

In addition, as shown in screen 340 of FIG. 3, the controller 110 determines whether the area of the lowest item displayed is completely displayed at the bottom of the GUI screen on the touch screen 130. When the controller 110 ascertains that the area of the lowest item is partially displayed at the bottom of the GUI screen, it can disable this part of the area of the touch screen 130. This is because, when part of the area of the lowest item is partially displayed, the user may scroll the screen up to completely show the area of the lowest item than touch a relatively small part area of the lowest item, and then touch the lowest item. Hence, in this case, the disabled area 25, which may be a fixed size, as shown in screen 310, may be limited to the size of the last item partially displayed. In this manner a touch on the "home" area in screen 340 will call the telephone number associated with home. However, in screen 310 a simultaneous touch of the "home" key and the touch key area within the disabled area 25 will not call the telephone number associated with home.

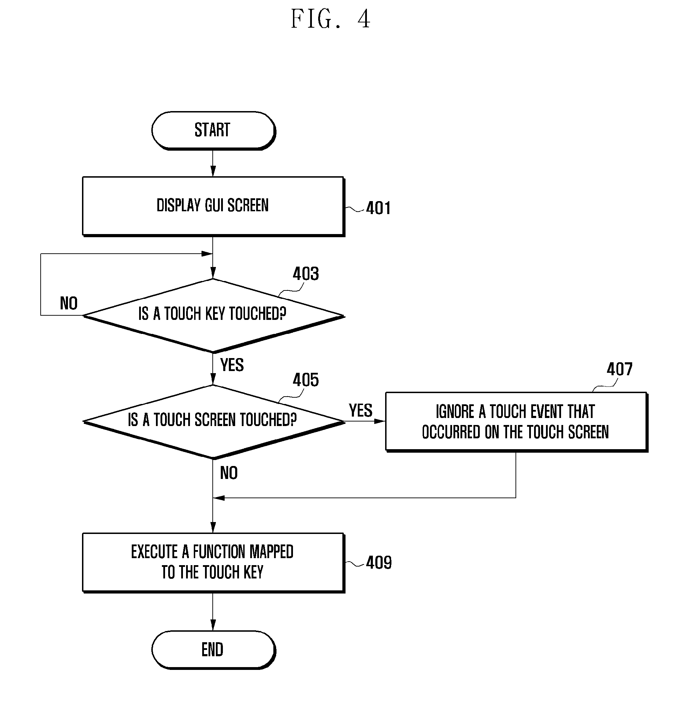

FIG. 4 illustrates a flow chart that describes a second embodiment of a method for preventing a touch malfunction in a mobile device 100, according to the invention.

Referring to FIGS. 1 to 4, the controller 110 controls the touch screen 130 to display a GUI screen, e.g., a screen for showing a list of calls (401). When the GUI screen is displayed at step 401, the controller 110 determines whether to receive a touch signal from the touch keys 141 (403). When the controller 110 does not receive a touch signal from the touch keys 141 at step 403, it retains the process of detecting whether to receive a touch signal at step 403.

However, when the controller 110 receives a touch signal from the touch keys 141 at step 403, the controller 110 determines whether a touch is made in an area of the touch screen 130 that is adjacent to the touch keys 141 (405).

When the controller 110 ascertains that a touch is made at an area of the touch screen 130 that is adjacent to the touch keys 141 at step 405, it ignores the touch event that occurred on the touch screen 130 (407).

After that, the controller 110 executes a function mapped to the touched touch key (409). For example, when the touched touch key is a cancel key 21, the controller 110 can display a screen that was displayed before displaying a screen for showing a list of calls, e.g., an idle screen.

However, when the controller 110 ascertains that a touch is not made in an area of the touch screen 130 that is adjacent to the touch keys 141 at step 405, it proceeds with step 409.

Meanwhile, when the user approximately simultaneously applies their touch to both the lowest item and one of the touch keys 141 when the area for the lowest item is completely displayed, the controller 110 has difficulty detecting whether the user wished to touch the lowest item or a corresponding touch key. However, when part of the area of the lowest item is displayed, it is likely that the user would rather scroll the screen up in order to completely display the lowest item than touch the relatively small area where the lowest item is currently shown, and then touch it. Therefore, as shown in screen 340 of FIG. 3, when a touch event occurs approximately simultaneously on both the lowest item displayed and one of the touch keys 141 while part of the area for the lowest item is being displayed, the controller 110 can ignore the touch event that occurred on the touch screen 130. That is, when a touch event occurs simultaneously on both the touch screen 130 and the touch keys 141 while part of the area for the lowest item is being displayed, the controller 110 concludes that the touch is made on the cancel key 21 and thus can ignore the touch event that occurred on the touch screen.

Although the embodiment, as shown in FIG. 4, is implemented in such a manner that touching occurs in order from one of the touch keys 141 to the touch screen 130, it should be understood that the invention is not limited to the embodiment. For example, it may be modified in such a manner that a touch gesture occurs approximately simultaneously on both a touch key and the touch screen 130, or on the touch screen 130 and then on a touch key.

As described above, the system and method for preventing touch malfunction in a mobile device according to the invention can be implemented with program commands that can be conducted via various types of computers and/or processors and/or dedicated hardware, wherein the programs commands may be recorded in computer-readable recording media. The computer-readable recording media contain program commands, data files, data structures, or the like, or a combination thereof. The program commands recorded in the recording media may be designed or configured to comply with the invention or may be software well-known to the ordinary person skilled in the art.

The computer-readable recoding media includes hardware systems for storing and conducting program commands. Examples of the hardware systems are magnetic media such as a hard disk, floppy disk, a magnetic tape, optical media such as CD-ROM and DVD, Magneto-Optical Media, such as optical disk, ROM, RAM, flash memory, etc. The program commands include assembly language or machine code complied by a complier or a higher level language interpreted by an interpreter. The hardware systems may be implemented with at least a processor that accesses at least one software module to execute the processing steps described herein.

As described above, the system and method according to the invention can execute a function allocated to a touch key in a device, without the execution of a function allocated to a touch screen which might be performed because part of a touch screen area is touched together when a touch key is touched. Therefore, the system and method can allow the user execute a desired function even when the area of a touch overlaps multiple executable functions.

Although exemplary embodiments of the invention have been described in detail hereinabove, it should be understood that many variations and modifications of the basic inventive concept herein described, which may be apparent to those skilled in the art, will still fall within the spirit and scope of the exemplary embodiments of the invention as defined in the appended claims.

For example, while the disabled has been shown to be a certain or known width respect to the boundary between the two illustrated areas, it would be recognized that the disabled area may be limited to only that area that would generate a touch input.

## Claims

1. A method for preventing malfunction in a mobile device that includes touch keys mapped to functions and a touch screen adjacent to the touch keys, **characterized by**:
displaying (201, 401) a Graphic User Interface (GUI) screen; and
disabling (203) part of the area of the touch screen that is adjacent to the touch keys, so that part of the disabled area of the touch screen cannot detect a touch gesture on the GUI screen.

2. The method of claim 1, wherein:
the GUI screen comprises a number of items; and
the GUI screen allows for vertical scrolling.

3. The method of claim 2, wherein the part of the area of the touch screen is a region with a known width along the boundary between the touch keys and the touch screen.

4. The method of claim 1, further comprising:
creating (403, 405) a touch event on both one of the touch keys and a touch screen area adjacent to the touched touch key;
ignoring (407) the touch event that occurred on the touch screen area adjacent to the touched touch key; and
executing (409) a function mapped to the touched touch key.

5. The method of claim 4, further comprising:
determining whether the area, allocated to a lowest item displayed at the bottom of the GUI screen, is completely displayed; and
ignoring the touch event that occurred on the touch screen area adjacent to the touched touch key when the area, allocated to the lowest item, is partially displayed.

6. A system for preventing touch malfunction in a mobile device, **characterized by**:
a touch screen (130) for displaying a Graphic User Interface (GUI) screen and detecting a touch gesture;
touch keys (141), adjacent to the touch screen (130), for executing corresponding functions; and
a controller (110) for disabling part of the area of the touch screen (130) that is adjacent to the touch keys (141), so that the disabled part of the touch screen cannot detect a touch gesture on the GUI screen.

7. The system of claim 6, wherein the disabled part of the touch screen is a region with a known width along the boundary between the touch keys and the touch screen.

8. The system of claim 6, wherein:
the GUI screen comprises a number of items; and
the GUI screen allows for vertical scrolling.

9. The system of claim 6, wherein the controller (110):
ignores the touch event that occurred on the touch screen (130), when a touch event occurs in response to both one of the touch keys (141) and a touch screen area adjacent to the touched touch key, and executes a function mapped to the touched touch key.

10. The system of claim 9, wherein the controller (110): determines whether the area, allocated to a lowest item to be displayed at the bottom of the GUI screen, is completely displayed; and ignores the touch event that occurred on the touch screen area adjacent to the touched touch key when the area allocated to the lowest item is partially displayed.

11. A terminal (100) **characterized by**:
a touch screen area (10);
a touch key area (20) positioned adjacent to the touch screen area (10); and
a processor in communication with a memory, the memory including code, which when accessed by the processor causes the processor to:
receive substantially simultaneously a touch input from each of the touch screen area (10) and the touch key area (20);
determine a location from which the touch input from the touch screen area (10); and
ignore the touch input from the touch screen area(10) when the location is within a known distance from the touch key area (20).

12. The terminal of claim 11, wherein the known distance is a fixed size from the touch key area (20).

13. The terminal of claim 12, wherein the known distance is measured as one of a unit of length and a number of pixels.

14. The terminal of claim 12, wherein the known distance corresponds to a last entry shown on the touch screen area (10), when the last entry is partially displayed.

15. The terminal of claim 11 wherein the step of ignoring the touch input comprises one of: disabling an area the known distance from the touch key area (20) from generating a touch input and not responding to a touch input within the known distance.
